(19) Europäisches Patentamt
European Patent Office
Office européen des brevets

(11) **EP 2 084 521 B1**

(12) **EUROPEAN PATENT SPECIFICATION**

(45) Date of publication and mention
of the grant of the patent:
**20.06.2018 Bulletin 2018/25**

(51) Int Cl.:
**G01N 27/02** (2006.01)  **A61B 5/00** (2006.01)
**G06K 19/077** (2006.01)

(21) Application number: **07873622.0**

(22) Date of filing: **20.11.2007**

(86) International application number:
**PCT/US2007/085199**

(87) International publication number:
**WO 2008/127429 (23.10.2008 Gazette 2008/43)**

(54) **ASSEMBLING AND UTILIZING RFID SENSORS IN CONTAINERS**

ZUSAMMENBAU UND NUTZUNG VON RFID-SENSOREN IN BEHÄLTNISSEN

SYSTÈME POUR ASSEMBLER ET UTILISER DES CAPTEURS DANS DES CONTENANTS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.11.2006 US 866714 P**

(43) Date of publication of application:
**05.08.2009 Bulletin 2009/32**

(73) Proprietor: **GE Healthcare Bio-Sciences Corp.**
**Piscataway, N.J. 08855 (US)**

(72) Inventors:
• **WANG, Hua**
**Clifton Park, New York 12065 (US)**

• **POTYRAILO, Radislav A.**
**Niskayuna, New York 12309 (US)**
• **RICE, Steven T.**
**Scotia, New York 12302 (US)**
• **PIZZI, Vincent F.**
**Millis, Massachusetts 02054 (US)**

(74) Representative: **Brann AB et al**
**P.O. Box 3690**
**Drottninggatan 27**
**103 59 Stockholm (SE)**

(56) References cited:
**WO-A-2005/074161    WO-A-2006/091631**
**WO-A-2007/139574    US-A1- 2007 090 926**
**US-B1- 6 359 444    US-B1- 7 038 470**

EP 2 084 521 B1

## Description

**Field of the Invention**

This invention relates to a system for measuring parameters in a container.

**Background of the Invention**

In order to keep humans safe from solutions, such as liquid, gas and solid that may be toxic or harmful to them different devices are used to test the solutions to determine if they are harmful. These devices include chemical or biological sensors that attach an identification marker with an antibody. For example, some chemical/biological sensors include a chip attached to an antibody, where the chip includes fluorescent markers identifying the specific antibody.

There are known chemical or biological sensors that include structural elements that are formed from a material that selectively responds to a specific analyte as shown in U.S. Patent No. 6,359,444. Other known chemical or biological sensors include an electromagnetically active material that is located in a specific position on the sensors that may be altered by an external condition as indicated in U.S. Patent No. 6,025,725. Some known chemical or biological sensor systems include components for measuring more than one electrical parameters as shown in U.S. Patent No. 6,586,946.

While the aforementioned sensors can be used to measure electrical parameters, a single use disposable bio-processing system utilizing these sensors has not been developed. While the disposable bio-processing systems and technologies may be readily used, their acceptance is hindered by the absence of effective single use, non invasive monitoring technologies. Monitoring of key process parameters is crucial to secure safety, process documentation and efficacy of the produced compounds as well as to keep the process in control. The utilization of in-line non-invasive disposable sensor technologies for multi-parameter in-line reading in disposable bio-processing assemblies will enable safe and fast production deployment because it allows a flawless uptake of disposable purification strategies and will eliminate expensive and time wasting off-line analytics. Therefore, there is a need for a system that enables the user to simply and non-invasively test for chemical and/or biological material in a solution in a disposable bio-processing system where the user can safely obtain measurements for the material, then dispose of the bio-processing system.

WO 2005/074161 (Peeters, John P.) relates to diagnostic radio frequency identification (RFID) sensors and applications thereof. The object of D1 is to provide a system and method for low cost wireless diagnostics using modified RFID tags. This is achieved by a diagnostic system that includes a flexible patch having an adhesive portion adapted to be positioned on a surface, in which patch an RFID tag and sensor module is integrated.

WO 2006/091631 (Watkins, Kenneth) relates to an environmental degradation sensor and a method of monitoring the condition of degradable products. Also described is a degradation sensor that indicates aging effects due to changing environmental conditions continuously and without electrical power except when the sensor is interrogated. More specifically, the sensor element of WO 2006/091631 comprises a plurality of electrically conductive particles and a control agent dispersed in a polymeric matrix; wherein said control agent is selected to influence a reaction rate of said sensor element to selected environmental conditions.

US 7,038,470 (Adnavced Design Consulting) provides a sensor for monitoring an environmental parameter in concrete including an enclosure; a detecting device connected to the enclosure for a detecting at least one environmental parameter in concrete, wherein the detecting device includes at least one capacitive element; an active material connected to the enclosure, wherein the active material is liable to respond to the environmental parameter and is operably connected to the capacitive element; a RFID chip mounted within the enclosure and operably connected to the detecting device; and an antenna operably connected to the RFID chip and the detecting device, wherein the antenna is part of an L-R-C circuit whose resonance frequency shifts within an assigned frequency band. The invention also provides a MEMS-based capacitive element that responds to an environmental parameter in concrete. The invention further provides a method of forming a MEMS-based capacitive element.

**Brief Summary of the Invention**

The present invention has been accomplished in view of the above-mentioned technical background, and it is an object of the present invention to provide a system for utilizing sensors in a container.

In a first aspect of the invention of the invention, a system for measuring multiple parameters is provided which system comprises a container 101 and a measurement device, wherein:

the container comprises a bioprocessing fluid 101a, and a protective layer 105 is deposited over at least one sensor 103 and at least one wall of the container, the protective layer being attached to the wall of the container to form a seal between the container and the at least one sensor, wherein the at least one sensor is embedded, integrated or incorporated to a wall 101b of the container, and the at least one sensor is configured to have an operable electromagnetic field adequate for the thickness of the container and the protective layer, i.e. the thickness and dielectric properties of the material of the protective layer 105 and the wall 101b of the container 101 must be adequate in order for a pickup antenna 108a to receive a signal from the sensor 103;

the at least one sensor is in conjunction with a tag 102 in proximity to an impedance analyzer 108 and a reader 106 that constitute the measurement device 111, whereby the impedance analyzer 108 includes the pickup antenna 108a, which excites the at least one sensor 103 and the pickup antenna 108a collects a reflected radio frequency signal from the at least one sensor 103;

the at least one sensor is configured to determine at least one parameter of the bioprocessing fluid;

the tag is configured to provide a digital ID associated with the at least one sensor, wherein the container is in proximity to the reader and an impedance analyzer 108; and

wherein the impedance analyzer is configured to receive a given range of frequencies from the at least one sensor based on the parameter and calculate parameter changes based on the measured complex impedance over the given range of frequencies

Thus, a container has a solution. A protective layer is deposited over at least one sensor and at least one wall of the container, where the protective layer is attached to the wall of the container to form a seal between the container and the at least one sensor. The at least one sensor is configured to have an operable electromagnetic field based on a thickness of the container and the protective layer. The at least one sensor in conjunction with a digital identification tag is in proximity to an impedance analyzer and a reader that constitute a measurement device. The at least one sensor is configured to determine at least one parameter of the solution. The tag is configured to provide a digital ID associated with the at least one sensor, where the container is in proximity to the reader and an impedance analyzer. The impedance analyzer is configured to receive a given range of frequencies from the at least one sensor based on the parameter and calculate parameter changes based on the measured complex impedance over the given range of frequencies.

**Brief Description of the Drawings**

These and other advantages of the present invention will become more apparent as the following description is read in conjunction with the accompanying drawings, wherein:

FIG. 1 illustrates a block diagram of a system for assembling and utilizing sensors in a container in accordance with an embodiment of the invention;
FIGs. 2A and 2B illustrate schematically some parts of the sensor embedded into the container in accordance with an embodiment of the invention;
FIG. 3 illustrates an exploded view of the radio frequency identification (RFID) tag of FIG. 1 in accordance with the invention;
FIGs. 4A, 4B, 4C and 4D are schematic diagrams of circuitry for RFID systems constructed in accordance with the invention;
FIG. 5 depicts a flow chart of how the sensors are incorporated into the container by employing ultrasound welding in accordance with the invention;
FIG. 6 depicts a flow chart of how the sensors are incorporated into the container by employing radio frequency welding in accordance with the invention;
FIG. 7 depicts a flow chart of how the sensors are incorporated into the container by employing heat lamination in accordance with the invention;
FIG. 8 depicts a flow chart of how the sensors are incorporated into the container by employing hot plate welding in accordance with the invention;
FIG. 9 depicts a flow chart of how the sensors are incorporated into the container by employing injection mold thermoplastics in accordance with the invention;
FIGs. 10A and 10B illustrate a sensor in silicon tubing in accordance with the invention;
FIG. 11 shows an example of sensors in accordance with the invention;
FIG. 12 illustrates an example of measuring the sensor in accordance with the invention;
FIG. 13 is a graphical representation of a dynamic response and response magnitude from FIG. 12 in accordance with the invention; and
FIG. 14 is a graphical illustration of a calibration curve of FIG. 12 in accordance with the invention.

**Detailed Description of the Invention**

The presently preferred embodiments of the invention are described with reference to the drawings, where like components are identified with the same numerals. The descriptions of the preferred embodiments are exemplary and are not intended to limit the scope of the invention.

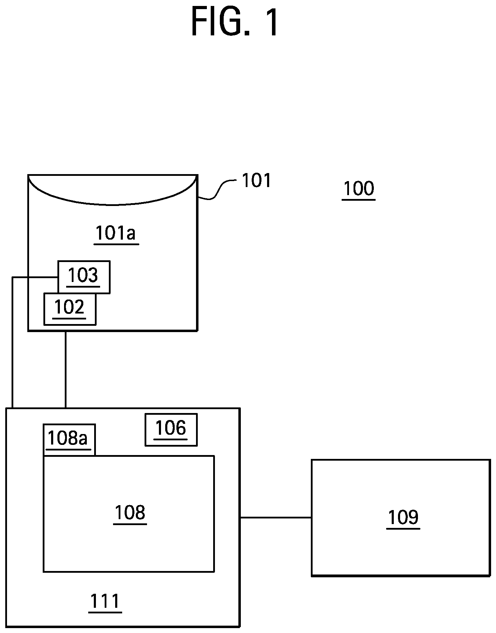

FIG. 1 illustrates a block diagram of a system for measuring parameters in a container. The system 100 includes a container 101, a tag 102 and a sensor 103 on the tag 102, a reader 106, an impedance analyzer 108, a standard computer 109 and a measurement device 111. Measurement device 111 includes the reader 106 and the impedance analyzer 108. Impedance analyzer 108 includes a pickup antenna 108a, which excites the plurality of RFID sensors in the array 103 and the pickup antenna 108a collects a reflected radio frequency signal from the plurality of RFID sensors in the arrays 103. The tag 102 and the sensor 103 are incorporated or integrated into the container 101. Several sensors 103 or a plurality of sensors 103 may be formed on the tag 102 in an array format. The sensor 103 or sensor array 103 is incorporated into container 101, which is connected by a wireless connection or an electrical wire connection to the impedance analyzer 108 and the computer 109. The sensor 103 or sensor array 103, the tag 102 are connected by a wireless connection or an electrical wire to the measurement device 111 and the computer 109. Impedance analyzer 108 is connected by a wireless connection or an electrical wire connection to the computer 109.

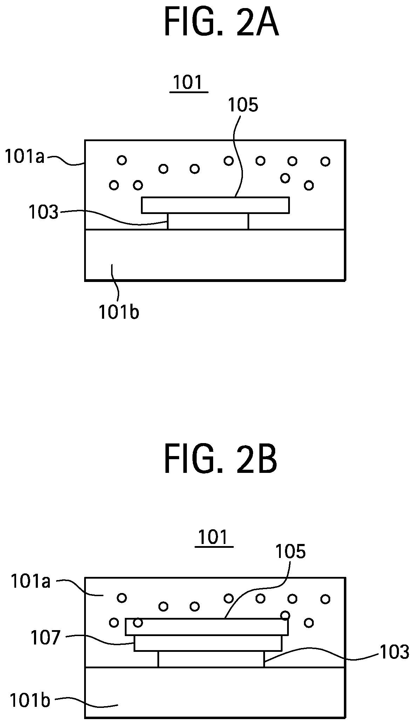

Referring to FIGs. 2A and 2B, container 101 may be a disposable bio-processing container, a stainless steel container, a plastic container, a polymeric material container, a chromatography device, a filtration device, a chromatography device with any associated transfer conduits, a filtration device with any associated transfer conduits, centrifuge device, centrifuge device with any associated transfer conduits, a pre-sterilized polymeric material container or any type of container known to those of ordinary skill in the art. In one embodiment, the biological container 101 is preferably made from but not limited to the following materials, alone or in any combination as a multi-layer film: ethylene vinyl acetate (EVA) low or very low-density polyethylene (LDPE or VLDPE) ethyl-vinyl-alcohol (EVOH) polypropylene (PP), polyethylene, low-density polyethylene, ultra-low density polyethylene, polyester, polyamid, polycarbontate, elastomeric materials all of which are well known in the art. RFID tags typically comprise front antennas and microchip with a plastic backing (e.g., polyester, polyimide etc).

Also, the container 101 may be made of a multilayer bio-processing film, made from one manufacturer. For example, the manufacturer may be Hyclone located in Logan, Utah, for example HyQ® CX5-14 film and HYQ® CX3-9 film. The CX5-14 film is a 5-layer, 14 mil (0,36 mm) cast film. The outer layer of this film is made of a polyester elastomer coextruded with an EVOH barrier layer and an ultra-low density polyethylene product contact layer. The CX3-9 film is a 3-layer, 9 mil (0,23 mm) cast film. The outer layer of this film is a polyester elastomer coextruded with an ultra-low density polyethylene product contact layer. The aforementioned films may be further converted into disposable bio-processing components in a variety of geometries and configurations all of which can hold a solution 101 a. In yet another embodiment of the invention, the container 101 may be a polymer material incorporated into a filtration device. Further, the container 101 may include or contain a chromatographic matrix.

Depending on the material of the container, the sensor 103 or sensor array 103, the tag 102 are connected by a wireless connection or an electrical wire to the measurement device 111 and the computer 109. Container 101 may also be a vessel that contains a fluid such as liquid or gas, where the vessel can have an input and an output. Further, container 101 can have a liquid flow or no liquid flow. Furthermore, container 101 can be a bag or a tube, or pipe, or hose.

The solution 101a may also be referred to as a bio-processing fluid. Inside the container 101 is the solution 101a. Solution 101a in the container 101 may be stored or for transfer. The solution 101a may be a liquid, fluid or gas, a solid, a paste or a combination of liquid and solid. For example, the solution 101a may be blood, water, a biological buffer or gas. The solution 101a may contain toxic industrial material, chemical warfare agent, gas, vapors or explosives disease marker in exhaled breath, bio-pathogen in water, virus, bacteria and other pathogens. If the solution 101a is blood it may contain various materials such as creatinine, urea, lactate dehydrogenase alkaline phosphate, potassium, total protein, sodium, uric acid, dissolved gases and vapors, such as $CO_2$, $O_2$, $NO_x$, ethanol, methanol, halothane, benzene, chloroform, toluene, chemical warfare agents, vapor, living tissue, fractionated from a biological fluid, vaccine or explosives and the like. On the other hand if the solution 101a is a gas or vapor, it may be $CO_2$, $O_2$, $NO_x$, ethanol, methanol, halothane, benzene, chloroform toluene or chemical warfare agent. If the solution 101a is a toxic industrial agent that can be inhaled and dissolved in blood then in may be ammonia, acetone cyanohydrin, arsenic tricholoride, chlorine, carbonyl sulfide or the like. In the case where the solution 101a is a chemical war agent it may be Tabun, Sarin, Soman, Vx, blister agents, Mustard gas, choking agent or a blood agent. If the solution 101a is a disease marker in exhaled breath it may be acetaldehyde, acetone, carbon monoxide and the like. If the solution 101a includes a bio-pathogen then it may be anthrax, brucellosis, shigella, tularemia or the like. Further, the solution 101a in the container may include prokaryotic and eukaryotic cells to express proteins, recombinant proteins, virus, plasmids, vaccines, bacteria, virus, living tissue and the like. Container 101 may have many structures, for example, a single biological cell, a micro fluidic channel, a micro titer plate, a Petri dish, a glove box, a hood, a walk-in hood, a room in a building or a building. Thus, container 101 can be of any size where sensor 103 and tag 102 are incorporated into the container 101 where they are positioned to measure the environment in the container 101 or the solution 101a in the container 101.

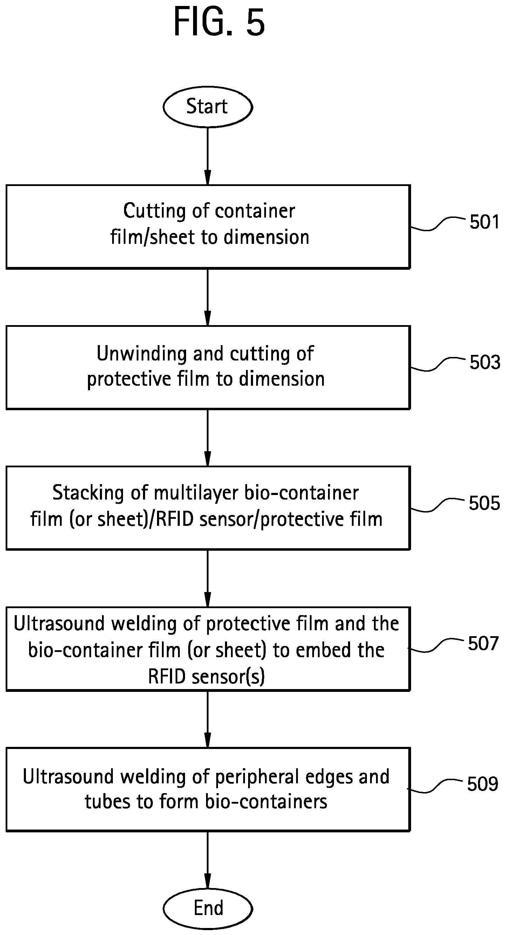

In close proximity to the solution 101a or in the solution 101a is the plurality of sensors in the array 103. The sensor array 103 is embedded, integrated or incorporated to a wall 101b of the container 101 by any of the various processes described in FIGs. 5-9, such as ultrasonic welding, dielectric welding (also known as high frequency (HF) welding or radio frequency (RF) welding), laser welding, hot Plate welding, hot knife welding, induction/impulse, insert molding, in-mold decoration and the other standard types of material welding and joining methods known to those of ordinary skill in the art.

The aforementioned processes are also utilized to deposit a protective layer 105 onto the sensor 103 as shown in FIGs. 2A and 2B. Protective layer 105 may be a barrier layer, a semi-permeable layer, or a perm-selective layer. This protective layer 105 is used to prevent the components of the sensor 103 and optional sensor coating 107, located in between the protective layer 105 and the sensor 103 (FIG. 2B) from discharging into the environment of the container 101 and keeps the solution 101a from corroding the sensor 103 that allows for the proper chemical or biological recognition of the embedded sensor 103. Also, the protective layer 105 prevents the bio-processing fluid (solution 101a) from contamination caused by any leachable or extractable that is present in the RFID sensor 103. The sensor coating 107 is selected for proper chemical or biological recognition. The typical sensor coating or film 107 is a polymer, organic, inorganic, biological, composite, or nano-composite film that changes its electrical property based on the solution 101a that it is placed in. The sensor film (or sensing coating) 107 may be a hydrogel such as (poly-(2-hydroxyethyl) methacrylate, a sulfonated polymer such as Nafion®, which is a registered trademark of DuPont located in Wilmington, DE, an adhesive polymer such as silicone adhesive, an inorganic film such as sol-gel film, a composite film such as carbon black-polyisobutylene film, a nanocomposite film such as carbon nanotube-Nafion® film, gold nanoparticle-hydrogel film, electrospun polymer nanofibers, metal nanoparticle hydrogen film electrospun inorganic nanofibers, electrospun composite nanofibers, and any other sensor material. These aforementioned materials for the sensor film 107 may be deposited onto the sensor 103 by ink-jet printing, screen printing, chemical deposition, vapor deposition, spraying, draw coating, wet solvent coating, roll-to-roll coating, slot die, gravure coating, roll coating, dip coating etc. In order to prevent the material in the sensor film 107 from discharging into the container 101, the sensor materials are attached to the surface of the plurality of sensors array 103 using the standard techniques, such as ion pairing, covalent bonding, electrostatic bonding and other standard techniques known to those of ordinary skill in the art. The thickness of the protective layer 105 is in a range of 1 nanometers to 300mm. The thickness of the wall 101b is in a range of 5 nanometers to 50 cm. Preferably, the wall 101b has a thickness of 10 cm. More preferably, the wall 101b has a thickness of 5cm or even more preferably, the wall 101b has a thickness of 1cm. However, if in-mold-decoration/injection molding is used to make 3-D container with embedded sensor, the wall thickness could be significantly higher, for example up to 10cm.

This thickness for the protective layer 105 and the wall 101b is necessary for the electro-magnetic field surrounding the sensor 103 to be operable and retained while it is within the container 101. A wireless integration of the sensor 103 with an impedance analyzer 108 occurs when an electromagnetic field that is generated around the sensor 103 when the impedance analyzer 108 is in proximity to the sensor 103. Specifically, the electromagnetic field extends out of the plane of sensor 103 into the direction of wall 101b and protective layer 105. Pickup antenna 108a excites the RFID sensor 103. In an embodiment, pickup antenna 108a is arranged on the opposite side of wall 101b from sensor 103. In another embodiment, pickup antenna 108a in proximity to the sensor 103 is arranged on the opposite side of protective layer 105 from sensor 103.

In order for the pickup antenna 108a to receive a signal from sensor 103 the thickness and dielectric properties of the material of the protective layer 105, wall 101b and the optional sensing coating 107 between pickup antenna 108a and sensor 103 must be adequate. In other embodiments of the invention, the pick-up antenna 108a may be attached or connected to the container 101 in several ways: 1. the pick-up antenna is mechanically attached to the container 101,2. the pick-up antenna is chemically attached to the container by any typical chemical means, such as an adhesive, and 3. the pick-up antenna 108a is attached to the container 101 by gravity. In another embodiment of the invention, the pick-up antenna 108a is attached to container 101 without electrical contact with the sensor 103. The signal from the sensor 103 will be attenuated upon an increase of the distance between sensor 103 and the pickup antenna 108a.

The signal from the sensor 103 will be changed, in general attenuated upon an increase of the conductivity of material that is positioned between sensor 103 and pickup antenna 108a. Thus, in general, under a constant realistic dielectric property of the wall 101b or protective layer 105, the smaller the thickness of the wall 101b or protective layer 105, the larger the signal will be from the sensor 103.

In order to provide a convenient way of positioning the pick-up antenna 108a in proximity to the sensor 103, the pick-up antenna 108a is attached to the container 101. In one embodiment, portions of the outer surface of the container 101 are modified in the region where the RFID sensor 103 is embedded, so the pick-up antenna 108a for the sensor 103 has a better stability control (position, tilt, etc.). In another embodiment, portions of the outer surface of the container 101 are modified in the region where the RFID sensor 103 is embedded, so the pick-up antenna 108a for the sensor 103 has a better stability control by using mechanical connections (plastic nipples, clamps, etc.) at the corners, sides, etc. where the pickup antenna 108a snaps or connects otherwise into its appropriate position.

In yet another embodiment, portions of the outer surface of the container 101 are modified in the region where the RFID sensor 103 is embedded, so the pick-up antenna 108a for the sensor 103 has a better stability control by using an adhesive material so the pickup antenna 108a connects into its appropriate position on the container 101. In another embodiment, portions of the outer surface of the container 101 are modified in the region where the RFID sensor 103 is embedded, so the pick-up antenna 108a for the sensor 103 has a better stability control by using the gravity force of the pick-up antenna 108a to better connect it into its appropriate position on the container 101. Other connection methods that do not use a galvanic or direct connection of wires between the pickup antenna 108a and sensor 103 can be used by those of ordinary skilled in the art.

Sensor 103 is covered by the protective layer 105 and the sensor coating 107. If the aforementioned thicknesses of the protective layer 105 and the wall 101b are not adhered to then the electromagnetic field surrounding the sensor 103 will decay and the sensor 103 will not be able to measure parameters of the solution 101.

The edges of the protective layer 105 are permanently attached, for example by welding or lamination to the wall 101b of the container 101 to form a tight seal. The container 101 also known as the disposable bioprocessing system with the embedded sensor or sensor arrays 103 meet the requirements of biocompatibility, sterilizability, mechanical toughness, elasticity, and low leachability. This protective layer may also include dense plastic films, membranes, microporous layers, mesoporous layers, such as expanded Polytetrafluoroethylene PTFE (e-PTFE), nanofiltration and ultrafiltration membranes, can also be used as protective layer or perm-selective layer to reduce bio-fouling, concentrate the species to be detected and to provide corrosion resistance for the sensor 103 components. In another embodiment of the invention, the protective layer 105 is a conductive polymer film. In yet another embodiment of the invention, the protective layer 105 may be a composite film that may include a filled polymer, polymer blend and alloy. This composite film has the desired electric constant, electrical conductivity, thermal conductivity, permeability of dissolved gases such as oxygen and $CO_2$.

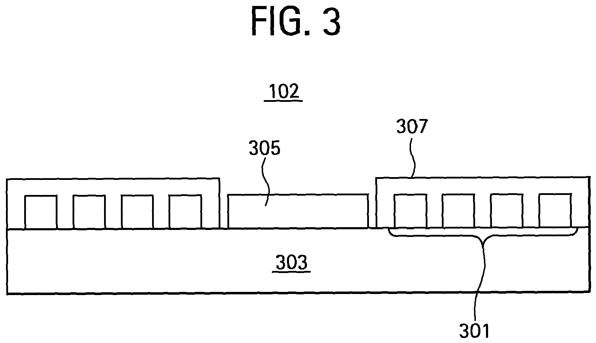

Reader 106 is located in the measurement device 111 outside of the container 101. An antenna 301 (FIG. 3) of tag 102 when covered by a polymer inorganic, composite or other type of film nanofiber mesh or nanostructured coating is the sensor 103 or the sensor array 103. Plurality of sensors in an array 103 can be a typical sensor or typical sensor array known to those of ordinary skill in the art or the plurality of sensors in an array may be radio frequency identification (RFID) sensors array 103. RFID sensors in the array 103 are devices that are responsible for creating a useful signal based on a parameter from the solution 101a. The parameters include conductivity measurement, pH level, temperature, blood relevant measurement, pressure measurement, ionic measurement, non ionic measurement, non-conductivity, material deposition such as biological deposition, protein deposition, bacterial deposition, cell deposition, virus deposition, inorganic deposition such as calcium deposition, electromagnetic radiation level measurement, pressure and other types of measurements that may be taken from a typical solution. Also, the parameters include measurements of physical, chemical, or biological properties of solutions as a function of time are important for a variety of applications. These measurements provide the useful information about reaction kinetics, binding kinetics, leaching effects, aging effects, extractables effects, diffusion effects, recovery effects, and other kinetic effects. The plurality of sensors in the array 103 are covered or wrapped in a typical sensor film 107 discussed above that enables it to obtain parameters of the solution 101a. Each of the plurality of RFID sensors in the array 103 may measure the parameter individually or each sensor 103 may measure all of the parameters in the solution 101a. For example, a sensor array of RFID sensor array 103 may only measure temperature of solution 101a or the sensor array of the plurality of RFID sensor array 103 may measure the conductivity, the pH and the temperature of the solution 101a. In addition, the plurality of RFID sensors in the array 103 is transponders that include a receiver to receive signals and a transmitter to transmit signals. The sensor 103 may act as a typical RFID sensor that is passive, semi-active or active. In another embodiment of the invention, the sensor 103 may be gamma-radiated by the standard gamma radiation process.

FIG. 3 illustrates a radio frequency identification (RFID) tag. The RFID tag 102 may also be referred to as a wireless sensor. RFID tag 102 includes a substrate 303 upon which are disposed on an antenna 301 and a identification chip 305. A wide variety of commercially available tags can be applied for the deposition of sensor structures. These tags operate at different frequencies ranging from about 125 kHz to about 2.4 GHz. Suitable tags are available from different suppliers and distributors, such as Texas Instruments, TagSys, Digi Key, Amtel, Hitachi and others. Also, the tag may be one of the following class of sensor technology, Sensor Single Parameter Radio Frequency (SSP$^{RF}$) and Sensor Multi-Parameter Radio Frequency (SMP$^{RF}$). Suitable tags can operate in passive, semi-passive and active modes. The passive RFID tag does not need a power source for operation, while the semi-passive and active RFID tags rely on the use of onboard power for their operation. RFID tag 102 has a digital ID stored in a chip 305 and the frequency response of the antenna circuit of the RFID tag 102 can be measured as the complex impedance with real and imaginary parts of the complex impedance. Also, the RFID tag 102 may be a transponder, which is an automatic device that receives, amplifies and retransmits a signal on a different frequency. Further, the RFID tag 102 may be another type of transponder that transmits a predetermined message in response to a predefined received signal. This RFID tag 102 is equivalent to the variety of RFID tags disclosed in "Chemical and Biological Sensors, Systems and Methods Based on Radio Frequency Identification" filed on October 26, 2005 with a serial number US 11/259,710 and "Systems and Method for Monitoring Parameters in Containers" filed on September 28, 2006 with a serial number PCT/LTS2006/038198 and US 11/536,030 both claiming US 60/803,265 filed May 26, 2006.

Antenna 301 is an integrated part of the sensor 103. Plurality of RFID sensors 103 are located at approximately at a distance of 0.1-100 cm from the reader 105 and impedance analyzer 107. In another embodiment of the invention, the RFID antenna 301 includes chemical or biological sensitive materials 307 used as part of the antenna material to modulate antenna properties. These chemical and biological materials are conductive sensitive materials such as inorganic, polymeric, composite sensor materials and the like. The composite sensor materials include a base material that is blended with conductive soluble or insoluble additive. This additive is in the form of particles, fibers, flakes, and other forms that provide electrical conductance. In yet another embodiment of the invention, the RFID antenna 301 includes chemical or biological sensitive materials used as part of the antenna material to modulate antenna electrical properties. The chemical or biological sensitive materials are deposited on the RFID antenna 301 by arraying, ink-jet printing, screen printing, vapor deposition, spraying, draw coating, and other typical depositions known to those of ordinary skill in the art. In yet another embodiment of the invention, where the temperature of solution 101a (FIG.1) is being measured the chemical or biological material covering the antenna 301 may be a material that is selected to shrink or swell upon temperature changes. This type of sensor material may contain an additive that is electrically conductive. The additive may be in the form of micro particles or nano-particles, for example carbon black powder, or carbon nano-tubes or metal nano-particles. When the temperature of the sensor film 307 changes these individual particles of the additive changes, which affects the overall electrical conductivity in the sensor film 307.

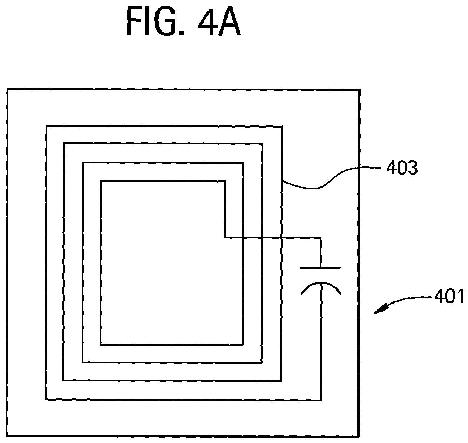

In addition to coating the sensor 103 with the sensing film 307 or sensing film 107, some physical parameters such as temperature, pressure, conductivity of solution, and others are measured without coating the sensor 103 with the sensing film 307. These measurements rely on the changes of the antenna properties as a function of physical parameter without having the sensing film 307 applied onto the sensor 103. While several embodiments of wireless sensors 103 are illustrated, it should be appreciated that other embodiments of the sensors 103 are within the scope of the invention. For example, circuitry contained on the wireless sensor may utilize power from the illuminating RF energy to drive a high Q resonant circuit, such as the circuit 403 within the capacitance based sensor 401 illustrated in FIG. 4A. The high Q resonant circuit 403 has a frequency of oscillation determined by the sensor 401 or sensor 103 incorporates a capacitor whose capacitance varies with the sensed quantity. The illuminating RF energy may be varied in frequency, and the reflected energy of the sensor is observed. Upon maximizing the reflect energy, a resonant frequency of the circuit 403 is determined. The resonant frequency may then be converted into a parameter, discussed above, of the sensor 401 or 103.

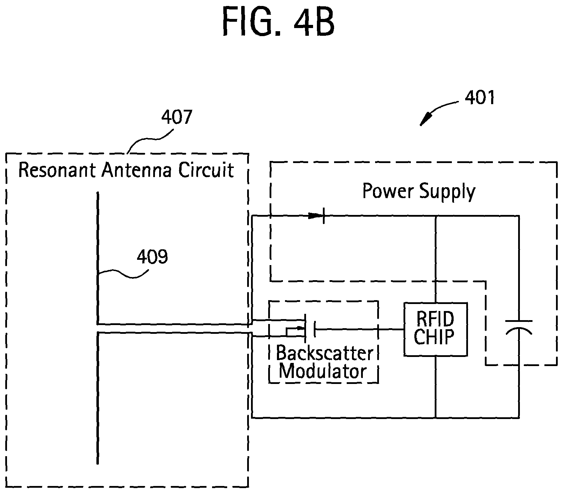

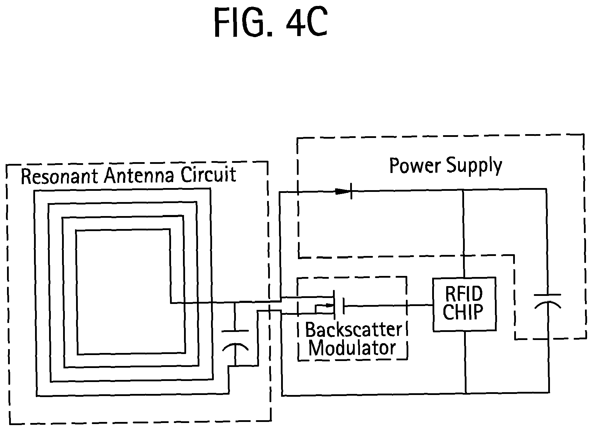

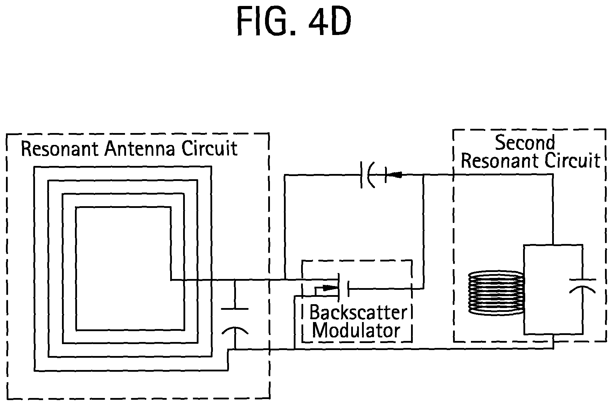

In other embodiments, illuminating RF energy is pulsed at a certain repetitive frequency close to the resonant frequency of a high Q oscillator. For example, as illustrated in FIG. 4B, the pulsed energy is rectified in a wireless sensor 401 or 103 (FIG. 1) and is used to drive a high Q resonant circuit 407 having a resonant frequency of oscillation determined by the sensor 405 to which it is connected. After a period of time, the pulsed RF energy is stopped and a steady level of illuminating RF energy is transmitted. The high Q resonant circuit 407 is used to modulate the impedance of the antenna 409 using the energy stored in the high Q resonant circuit 407. A reflected RF signal is received and examined for sidebands. The frequency difference between the sidebands and the illuminating frequency is the resonant frequency of the circuit 401. FIG. 4C illustrates another embodiment of wireless sensors used for driving high Q resonant circuits. FIG. 4D illustrates a wireless sensor that may include both a resonant antenna circuit and a sensor resonant circuit, which may include an LC tank circuit. The resonant frequency of the antenna circuit is a higher frequency than the resonant frequency of the sensor circuit, for example, as much as four to 1000 times higher. The sensor circuit has a resonant frequency that may vary with some sensed environmental condition. The two resonant circuits may be connected in such a way that when alternating current (AC) energy is received by the antenna resonant circuit, it applies direct current energy to the sensor resonant circuit. The AC energy may be supplied through the use of a diode and a capacitor, and the AC energy may be transmitted to the sensor resonant circuit through the LC tank circuit through either a tap within the L of the LC tank circuit or a tap within the C of the LC tank circuit. Further, the two resonant circuits may be connected such that voltage from the sensor resonant circuit may change the impedance of the antenna resonant circuit. The modulation of the impedance of the antenna circuit may be accomplished through the use of a transistor, for example a FET (field-effect transistor).

Alternatively, illuminating radio frequency (RF) energy is pulsed at a certain repetitive frequency. The pulsed energy is rectified in a wireless sensor (FIGS. 4A-4D) and is used to drive a high Q resonant circuit having a resonant frequency of oscillation determined by the sensor to which it is connected. After a period of time, the pulsed RF energy is stopped and a steady level of illuminating RF energy is transmitted.

The resonant circuit is used to modulate the impedance of the antenna using the energy stored in the high Q resonant circuit. A reflected RF signal is received and examined for sidebands. The process is repeated for multiple different pulse repetition frequencies. The pulse repetition frequency that maximizes the amplitude of the sidebands of the returned signal is determined to be the resonant frequency of the resonant circuit. The resonant frequency is then converted into a parameter or measurement on the resonant circuit.

Referring to FIG. 1, below the RFID tag 102 is an RFID reader 106 and impedance analyzer 108 (measurement device 111) which provides information about real and complex impedance of the RFID tag 102 based on reading the information from the RFID antenna 301. The RFID reader 106 may be a Model M-1, Skyetek, CO, which is operated under a computer control using the software Lab VIEW. Also, the reader 106 reads the digital ID from the RFID tag 102. The reader 106 may also be referred to as a radio frequency identification (RFID) reader. RFID tag 102 is connected by a wireless connection or an electrical wire to the RFID reader 106 and the impedance analyzer 108. The RFID reader 106 and the impedance analyzer 108 (measurement device 111) are connected by a wireless or electrical wire connection to the standard computer 109. This system may operate in 3 ways that include: 1. the read system of the RFID reader 106, where the RFID reader 106 will read information from the plurality of RFID sensors array 103 to obtain chemical or biological information and the RFID reader 106 that reads the digital ID of the RFID tag 102; 2. the RFID reader 106 reads the digital ID of the RFID tag 102 and the impedance analyzer 108 reads the antenna 301 to obtain the complex impedance; and 3. if there are a plurality of RFID sensors 103 with and without sensor films where the RFID reader 106 will read information from the plurality of RFID sensors array 103 to obtain chemical or biological information and the RFID reader 106 reader reads the digital ID of the RFID tag 102 and the impedance analyzer 108 reads the antenna 301 to obtain the complex impedance.

Measurement device 111 or computer 109 includes a pattern recognition subcomponent (not shown). Pattern recognition techniques are included in the pattern recognition subcomponent. These pattern recognition techniques on collected signals from each of the sensor 103 or the plurality of RFID sensors in the array 103 may be utilized to find similarities and differences between measured data points. This approach provides a technique for warning of the occurrence of abnormalities in the measured data. These techniques can reveal correlated patterns in large data sets, can determine the structural relationship among screening hits, and can significantly reduce data dimensionality to make it more manageable in the database. Methods of pattern recognition include principal component analysis (PCA), hierarchical cluster analysis (HCA), soft independent modeling of class analogies (SIMCA), neural networks and other methods of pattern recognition known to those of ordinary skill in the art. The distance between the reader 106 and the plurality of RFID sensors in the array 103 or sensor 103 is kept constant or can be variable. The impedance analyzer 108 or the measurement device 111 periodically measures the reflected radio frequency (RF) signal from the plurality of RFID sensors in the array 103. Periodic measurements from the same sensor 103 or the plurality of RFID sensors in the array 103 provide information about the rate of change of a sensor signal, which is related to the status of the chemical/biological/physical environment surrounding the plurality of RFID sensors in the array 103. In this embodiment, the measurement device 111 is able to read and quantify the intensity of the signal from the plurality of RFID sensors in the array 103.

In proximity of the RFID reader 106 is the impedance analyzer 108, which is an instrument used to analyze the frequency-dependent properties of electrical networks, especially those properties associated with reflection and transmission of electrical signals. Also, the impedance analyzer 108 may be a laboratory equipment or a portable specially made device that scans across a given range of frequencies to measure both real and imaginary parts of the complex impedance of the resonant antenna 301 circuit of the RFID tag 102. In addition, this impedance analyzer 108 includes database of frequencies for various materials associated with the solution 101a described above. Further, this impedance analyzer 108 can be a network analyzer (for example Hewlett Packard 8751A or Agilent E5062A) or a precision impedance analyzer (Agilent 4249A).

Computer 109 is a typical computer that includes: a processor, an input/output (I/O) controller, a mass storage, a memory, a video adapter, a connection interface and a system bus that operatively, electrically or wirelessly, couples the aforementioned systems components to the processor. Also, the system bus, electrically or wirelessly, operatively couples typical computer system components to the processor. The processor may be referred to as a processing unit, a central processing unit (CPU), a plurality of processing units or a parallel processing unit. System bus may be a typical bus associated with a conventional computer. Memory includes a read only memory (ROM) and a random access memory (RAM). ROM includes a typical input/output system including basic routines, which assists in transferring information between components of the computer during start-up.

Above the memory is the mass storage, which includes: 1. a hard disk drive component for reading from and writing to a hard disk and a hard disk drive interface, 2. a magnetic disk drive and a hard disk drive interface and 3. an optical disk drive for reading from or writing to a removable optical disk such as a CD-ROM or other optical media and an optical disk drive interface (not shown). The aforementioned drives and their associated computer readable media provide non-volatile storage of computer-readable instructions, data structures, program modules and other data for the computer 109. Also, the aforementioned drives may include the algorithm, software or equation that has the technical innovation of obtaining the parameters for the solution 101a, which will be described in the flow charts of FIG. 5-9 that works with the processor of computer 109. The computer 109 also includes a Lab VIEW software that collects data from the complex impedance response from the tag 102. Also, the computer 109 includes a KaliedaCrraph software from Synergy Software in Reading PA and PLS_Toolbox software from Eigenvector research, Inc., in Manson, WA operated with Matlab software from the Mathworks Inc., Natick, MA to analyze the data received. In another embodiment, the obtained parameters of the solution 101a algorithm, software or equation may be stored in the processor, memory or any other part of the computer 109 known to those of ordinary skill in the art.

FIG. 5 is a flow chart that depicts how the sensors are incorporated into the container by employing an ultrasound welding method. At block 501, a layer or film of the container 101 (FIG. 1) is cut into a desired dimension. The layer, film or wall 101b (FIG. 2) of the container 101 as described above may have multi-layers and be made of various types of materials. Wall 101b may also be referred to as a first layer of film 101b. The film 101b of container 101 may be cut by any type of cutting device such as a knife, pair or scissors or any standard cutting device or automated cutting device known to those of ordinary skill in the art. Container 101 may have many various structures, as stated above, such as a Petri dish or a micro titer plate or any other type of structure. For this example, the dimensions of this cut film 101b of container may have a length and width in a range of 1x1mm to 6x6 inches (15,2x15,2 cm) (or more depending upon the end applications and size of the sensor 103 (FIG. 1). The size of the dimensions of this cut film 101b is approximately one wall size of the container 101. Next, at block 503 the protective layer film 105 (FIG. 2) is cut by the aforementioned typical cutting device. The protective layer film 105, as described above, may be made of different types of materials, such as PTFE. Protective layer film 105 is cut into dimensions smaller than the cut film of container 101, and preferably larger than the sensor 103. For example, the dimensions of the protective layer film 105 may have a range of .08x.08 mm to 3x3 inches (7,6x7,6 cm) or more depending on the size of the sensor 103 or the wall 101b. The protective layer film 105 may be referred to as a second layer of film 105.

At block 505, the sensor 103 is placed or stacked in between the wall 101b and the protective layer film 105. Preferably, the sensor 103 is placed in between a middle portion of wall 101b and the protective layer film 105. In another embodiment of the invention, an optional sensor coating 107 is pre-deposited on the sensor or cut by the aforementioned cutting methods where the dimensions are smaller than the protective layer film 105. Then the optional sensor coating 107 is placed in between the sensor 103 and the protective layer film 105. Optional sensor coating 107 may be considered a fourth layer of film. In another embodiment of the invention, the protective layer of film 105 or the sensor coating 107 may be the only layer film deposited over the sensor 103.

Next, at block 507 an ultrasonic welding process is utilized to compress the protective layer 105, optional sensing coating 107 over the sensor 103 into the wall 101b. The typical ultrasonic welding process utilizes a typical titanium or aluminum component called a horn or sonotrode that is brought into contact with the protective layer 105. A controlled pressure from the typical horn is applied to the protective layer 105, optional sensing coating 107, over the sensor 103 and the wall 101b clamping these components together. The horn vibrates vertically at a rate of 20,000 Hz (20 kHz) or 40,000 Hz (40 kHz) times per second, at distances measured in thousands of an inch (microns), for a predetermined amount of time typically called weld time. The mechanical vibrations are transmitted through the protective layer 105 to the joint surfaces between the protective layer 105, optional sensing coating 107, sensor 103 and wall 101b to create frictional heat. When the temperature at the joint interfaces reaches the melting point at the plastic of the protective layer 105 and wall 101b then the vibration is stopped, which allows the melted plastic of these components to begin cooling. The clamping force of the typical horn is maintained for a predetermined amount of time, for example 30 seconds to 3 hours to allow the parts to fuse as the melted plastic of the protective layer 105 and wall 101b cools and solidifies, which is known as hold time. In another embodiment of the invention, a higher force of pressure may be applied during this hold time to further hold the components together. After the hold time, then the typical horn is retracted from the combined protective layer 105, sensing coating 107, sensor 103 and wall 101b.

Next, at block 509, another wall 101c or a multi-layer film or a third layer of film is ultrasound-welded by the horn process forming the container 101, as stated above, onto the combination protective layer 105, optional sensing coating 107, sensor 103 and wall 101b. Preferably, this wall 101c has the same dimensions as wall 101b so peripheral edges of wall 101c are hermetically sealed onto the peripheral edges of wall 101b. One tube or a plurality of tubes are inserted between walls 101b and 101c, and ultrasound-welded by using the typical horn process described above to join the plurality of tubes into the wall 101b and 101c, and then this process ends. These tubes represent a means for a solution 101a to be inserted and removed from the container 101. The welding of the peripheral edges and the plurality of tubes could either occur at separate steps or in the same process step.

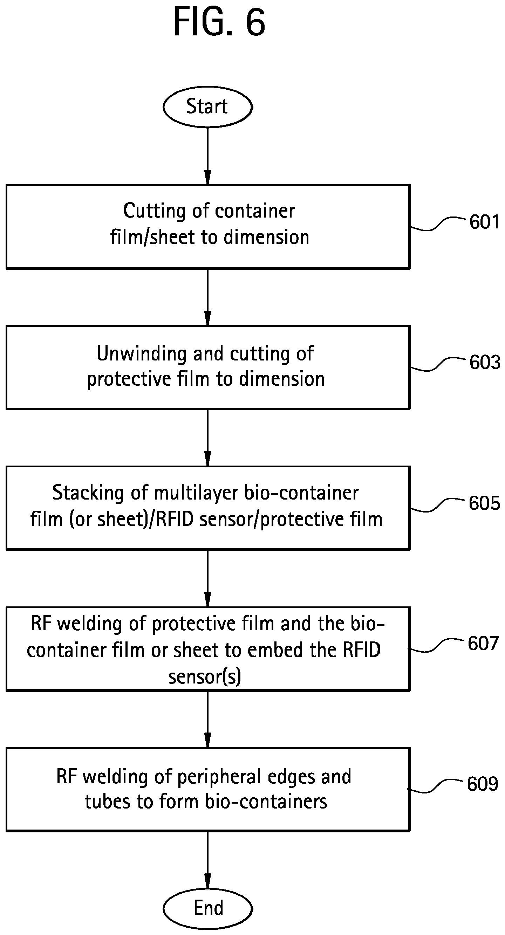

FIG. 6 is a flow chart that depicts how the sensors are incorporated into the container by employing a radiofrequency (RF) welding method. The processes in blocks 601, 603 and 605 are the same as in respective blocks 501, 503 and 505 so a description of these processes will not be disclosed herein. At block 607, a typical plastic welder is utilized to melt the protective layer 105, optional sensor coating 107 and sensor 103 onto the wall 101b (FIG. 2). The typical plastic welder includes a radio frequency generator (which creates the radio frequency current), a pneumatic press, an electrode that transfers the radio frequency current to the protective layer 105, optional sensor coating 107, sensor 103 and wall 101b that is being welded and a welding bench that holds the aforementioned components in place. There are also different types of plastic welders that may be used for radiofrequency welding such as tarpaulin machines, garment machines and automated machines. The aforementioned machine's tuning can be regulated to adjust its field strength to the material being welded.

At block 609 another wall 101c or multi-layer film is radiofrequency welded forming container 101, as in block 607, onto the combination protective layer 105, optional sensing coating 107, sensor 103 and wall 101b.

Preferably, this wall 101c has the same dimensions as wall 101b so peripheral edges of wall 101c are hermetically sealed onto the peripheral edges of wall 101b. One tube or a plurality of tubes are inserted between walls 101b and 101c, and RF-welded to join the plurality of tubes into the wall 101b and 101c, and then this process ends. These tubes represent a means for a solution 101a to be inserted and removed from the container 101. The welding of the peripheral edges and the plurality of tubes could either occur at separate steps or in the same process step.

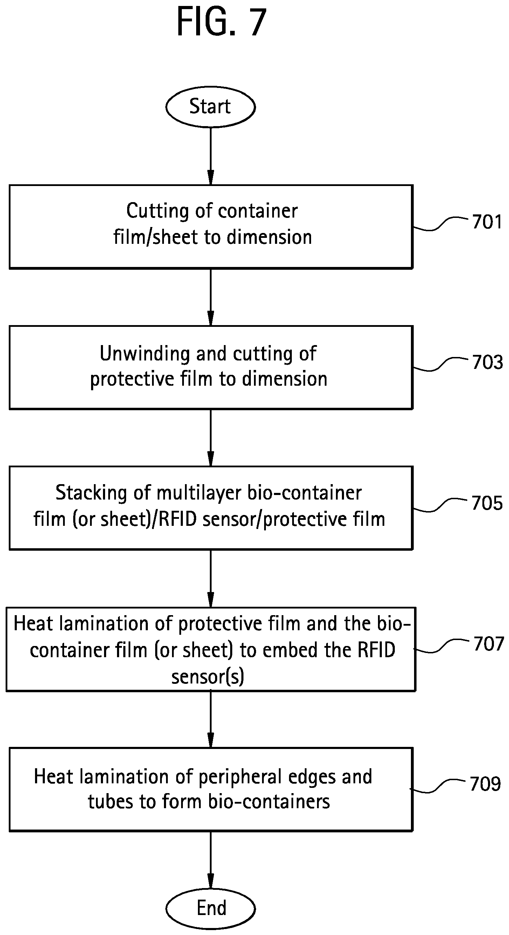

FIG. 7 is a flow chart that depicts how the sensors are incorporated into the container by a heat lamination method. The processes in blocks 701, 703 and 705 are the same as in respective blocks 501, 503 and 505 so a description of these processes will not be disclosed herein. At block 707, a user utilizes a typical lamination device, such as Carver Lamination Press manufactured by Carver Inc. in Wabash, IN, a MaxiLam Heat Laminator manufactured by K-Sun in Scottsdale, AZ, or a heat staking machine provided by PSA at Benthany, CT to melt the protective layer 105, optional sensor coating 107 and sensor 103 onto the wall 101b (FIG. 2). For example, the RFID tag 102 with a nominal frequency of 13.5 MHz of sensor 103 is laminated to the interior of the multi-layer wall 101b of container 101, such as ULDPE layer of a 5-L Labtainer™ Bioprocess Container a HyQ® CX5-14 film made by HyClone, purchased from Aldrich. This CX5-14 film is a 5-layer, 14 mil (0,36 mm) cast film. The outer layer of the wall 101b includes a polyester elastomer coextruded with an EVOH barrier layer and an ultra-low density polyethylene layer. The protective layer 105 is a brown 4 mil (0,10 mm) thick ultra-low density polyethylene monolayer film (HyQ® BM1 film made by HyClone, purchased from Aldrich).

The actual laminating or embedding process occurs by laminating the protective layer 105, optional sensor coating 107 and the wall 101b, with the RFID sensor 103 sandwiched in between container wall film 101b and protective film 105 in a typical Carver lamination press. The Carver press utilizes a frame that is slightly larger than the RFID sensor 103 to prevent the Carver press from providing direct pressure on the sensor 103. The frame is made of aluminum and coated with Teflon for easy release. The frame may have any shape, but for this example it has a rectangular frame with any type of dimensions, for example a dimension of 50x70mm with a hollow inside of the dimension of 40x50mm and a thickness of .7mm. During this lamination process, the Carver press kept a steady temperature of 140 degrees Celsius. The sandwiched structure with the frame was then moved inside the Carver press with minimum pressure and kept for 1 minute, and then kept at 2000 lbs (907,2 kg) force for 30 seconds. The laminated structure of the protective layer 105, optional sensor coating 107 and the wall 101b are transferred to a cold press.

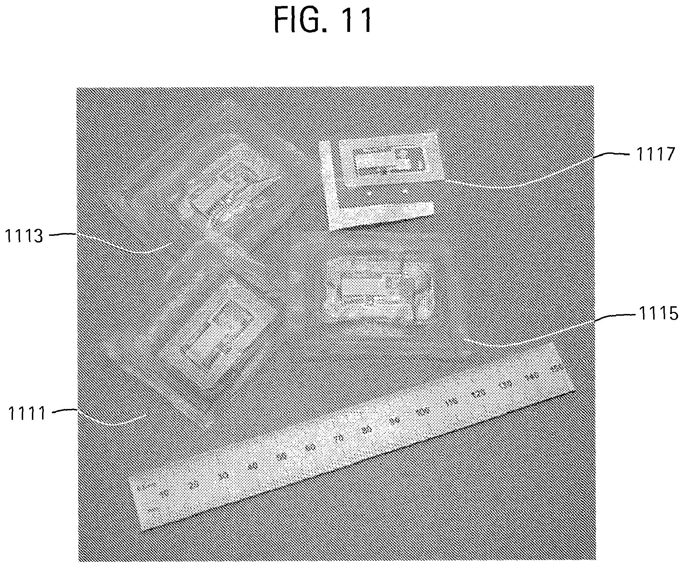

At block 709, another wall 101c or multi-layer film is laminated and cold pressed forming container 101, as in block 707, onto the combination protective layer 105, sensing coating 107, sensor 103 and wall 101b. Preferably, this wall 101c has the same dimensions as wall 101b so peripheral edges of wall 101c are hermetically sealed onto the peripheral edges of wall 101b. At least one plastic tube or a plurality of plastic tubes is laminated to the walls 101b and 101c by utilizing the aforementioned lamination device as in block 707. These plastic tubes serve as inserts to insert solution 101a into the container 101 and outlets for releasing solution 101a from the container 101. FIG. 11 depicts an example of three laminated RFID sensors and one RFID sensor without lamination. The three RFID sensors 1111, 1113 and 1115 are equivalent to sensor 103 so a description of sensors 1111, 1113 and 1115 will not be disclosed herein. RFID sensors 1111, 1113 and 1115 are laminated into a wall 101b made of polypropylene of the container 101. A RFID sensor 1117 is not laminated into a container 101.

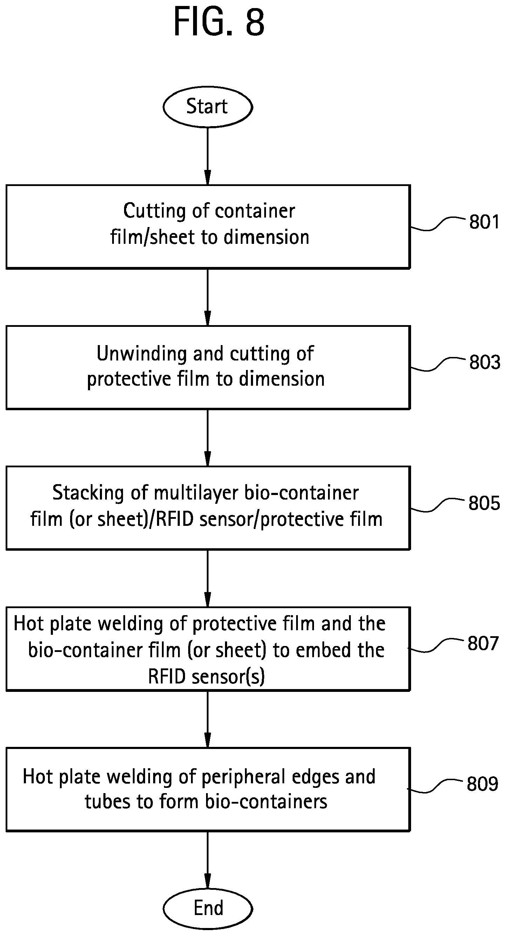

FIG. 8 is a flow chart that depicts how the sensors are incorporated into the container by employing a hot plate welding method. The processes in blocks 801, 803 and 805 are the same as in respective blocks 501, 503 and 505 so a description of these processes will not be disclosed herein. At block 807, a user utilizes a typical hot plate welding device that has a heated platen to melt the joining surfaces of the protective layer 105, optional sensor coating 107, sensor 103 onto the wall 101b (FIG. 2). The part halves of the protective layer 105, optional sensor coating 107, sensor 103 and the wall 101b are brought into contact with a precisely heated platen for a predetermined period, for example 5 seconds to 1 hour depending on the thickness of the materials of the protective layer 105, optional sensor coating 107, sensor 103 and wall 101b. After the plastic interfaces of the protective layer 105, sensor coating 107, sensor 103 and the wall 101b have melted, these parts are brought together to form a molecular, permanent, and often hermetic bond. A properly designed joint welded under precise process control often equals or exceeds the strength of any other part area.

At block 809, another wall 101c or multi-layer film is hot plated welded forming container 101, as in block 807, onto the combination protective layer 105, optional sensing coating 107, sensor 103 and wall 101b. Preferably, this wall 101c has the same dimensions as wall 101b so peripheral edges of wall 101c are hermetically sealed onto the peripheral edges of wall 101b. At least one plastic tube or a plurality of plastic tubes are inserted between walls 101b and 101c and are hot plate welded to the walls 101b and 101c by utilizing the aforementioned heated platen as in block 807, and then this process ends. These plastic tubes serve as inserts to insert solution 101a into the container 101 and outlets for releasing solution 101a from the container 101.

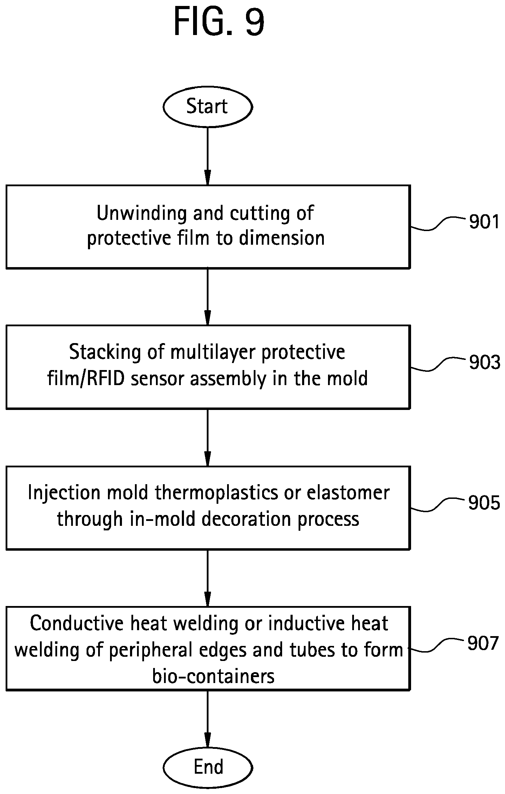

FIG. 9 is a flow chart that depicts how the sensors are incorporated into the container by employing an injection molding/in-mold decoration method. The processes in blocks 901 and 903 are the same as in respective blocks 503 and 505 so a description of these processes will not be disclosed herein. However, at block 903 the protective layer 105, optional sensing coating 107, sensor 103 is stacked inside of a typical mold instead of only being stacked. At block 905, a user utilizes a typical injection molding manufacturing technique to combine protective layer 105 with the optional sensor coating 107 and the wall 101b. Typically, injection molding is a manufacturing technique for making parts from thermoplastic materials. The wall 101b materials are injected at high pressure into a mold, which is the inverse of the desired shape. The mold is made typically by a mold maker or a toolmaker from metal, usually either steel or aluminum, and precision machined to form the features of the desired part. After solidification, the assembly of protective layer 105, optional sensing coating 107, sensor 103, and a relative thick injection molded wall 101b are made.

At block 907, another wall 101c and a plurality of tubes that acts as inlet and outlets for the solution 101a, as described above, are placed above the protective layer 105, optional sensor coating 107, sensor 103 and wall 101b, where heat is applied to melt the plurality of tubes and the wall 101c onto the wall 101b forming container 101. Preferably, the wall 101c melts onto the periphery edges of the wall 101b to provide a hermetic seal forming the container 101 or bio-container 101, and then this process ends. In another embodiment of the invention, a standard inductive heating method known to those of ordinary skill in the art may be used in place of conductive heating to melt the plurality of tubes onto the protective layer 105, optional sensor coating 107, sensor 103 and wall 101b. The process depicted in Figure 9 is useful for making 3-dimensional bio-processing containers with relative thick walls.

In other embodiments, various permutations of the processes depicted in Figure 5 to 9 are used in making the container with embedded sensor. More than one material welding and joining methods can be used at various stages of a container fabrication process. For example, in another embodiment of a process of making container with embedded sensors, the sensor to container attachment is accomplished by heat sealing of the sensor, while the sealing of the container material and tubes is accomplished by RF welding, In addition, various permutations of the container manufacturing process steps depicted in Figures 5 to 9 could be used. For example, yet in another embodiment of the process of making container with embedded sensors, largely continuous webs can be used in making the container with embedded sensor first, and the cutting to separate the as-made container is performed at the end of the process steps.

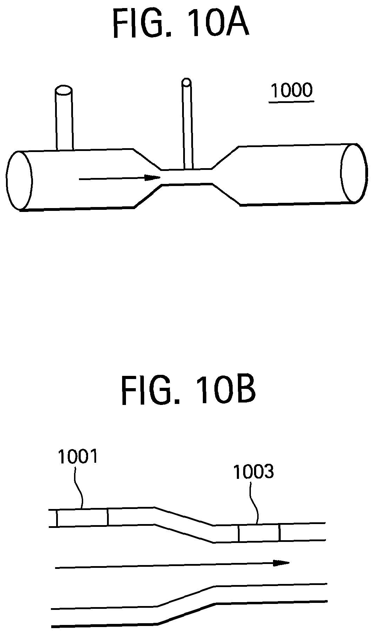

FIG. 10a depicts a silicone tubing 1000 with differing diameters that produce differential pressure as fluid flows through it. FIG. 10b shows an exploded view of the silicone tubing of FIG. 10a embedded with RFID pressure sensors 1001 and 1003. RFID pressure sensors 1001 and 1003 operate in the same capacity as RFID sensor 103, described above, so a description of sensors 1001 and 1003 will not be disclosed herein. However, pressure RFID pressure sensors 1001 and 1003 provide the network impedance analyzer 108 (FIG. 1) located closed to the RFID pressure sensors 1001 and 1003 with pressure related information, for example, Pa indicates a pressure level of 10psi (0,68 bar), and Pb indicates a pressure level of 8psi (0,55 bar). Thus, Pa-Pb=10psi-8psi=2psi (0,68-0,55=0,13 bar) or change in pressure. Based on the standard Bernoulli principle and utilizing the RFID pressure sensors 1001 and 1003, the mass flow rate of the liquid flowing through the silicone tubing 1000 can be calculated.

A fluid passing through smoothly varying constrictions of the silicone tubing 1000 experience changes in velocity and pressure. These changes can be used to measure the flow rate of the fluid. As long as the fluid speed is sufficiently subsonic (V<Mach 0.3), the incompressible Bernoulli's equation describes the flow by applying this equation to a streamline of fluid traveling down the axis of the horizontal tube provides the following equations:

a is the first point along the pipe
b is the second point along the pipe
P is static pressure in Newton's per meter squared
$\rho$ is density in kilograms per meter cubed
v is velocity in meters per second
g is gravitational acceleration in meters per second squared
h is height in meters

$$Pa\text{-}Pb = \Delta P = 1/2\rho V_b{}^2 - 1/2\ \rho V_a{}^2$$

(Equation 1)

From continuity, the throat velocity Vb can be substituted out of the above equation to give,

$$\Delta P = 1/2\rho V a^2 \left[ (A_a/A_b)^2 - 1 \right]$$

(Equation 2)

Solving for the upstream velocity Va and multiplying by the cross-sectional area Aa gives the volumetric flow rate Q,

$$Q = C \sqrt{\frac{2\Delta p}{\rho}} \frac{A_a}{\sqrt{\left(\frac{A_a}{A_b}\right)^2 - 1}}$$

(Equation 3)

Ideal, in viscid fluids would obey the above equation. The small amounts of energy converted into heat within viscous boundary layers tend to lower the actual velocity of real fluids somewhat. A discharge coefficient C is typically introduced to account for the viscosity of fluids.

$$Q = C \sqrt{\frac{2\Delta p}{\rho}} \frac{A_a}{\sqrt{\left(\frac{A_a}{A_b}\right)^2 - 1}}$$

(Equation 4)

C is found to depend on the Reynolds Number of the flow, and usually lies between 0.90 and 0.98 for smoothly tapering venturis.
The mass flow rate can be found by multiplying Q with the fluid density,

$$Q_{mass} = \rho Q \qquad \text{(Equation 5)}$$

For example the diameters of the silicone tube 1001 upstream tubing $Da$ and the down stream section $Db$ are 20 cm and 4 cm respectively. The fluid density of the liquid flow inside the tubing is 1 kg/m$^3$. Also, the diameter of an upstream portion of silicon tubing 1000 or $D_a$ =20cm, the diameter of the silicone tubing 1000 neck or $D_b$=4 cm, fluid density or $\rho$=1 kg/m$^3$, Discharge coefficient $C$=0.98, and velocity A or V is 2.35 m/s. Pa indicates a pressure level of 10psi (0,68 bar), and Pb indicates a pressure level of 8psi (0,55bar). Thus, D$p$ Pa-Pb=10psi-8psi=2psi (0,68-0,55=0,13 bar) or change in pressure. Based on the standard Bernoulli principle and utilizing the RFID pressure sensors 1001 and 1003, the volume flow rate and the mass flow rate of the liquid flowing through the silicone tubing 1000 is calculated from equations 4 and 5 are .07m$^3$/s and .07 kg/s, respectively.

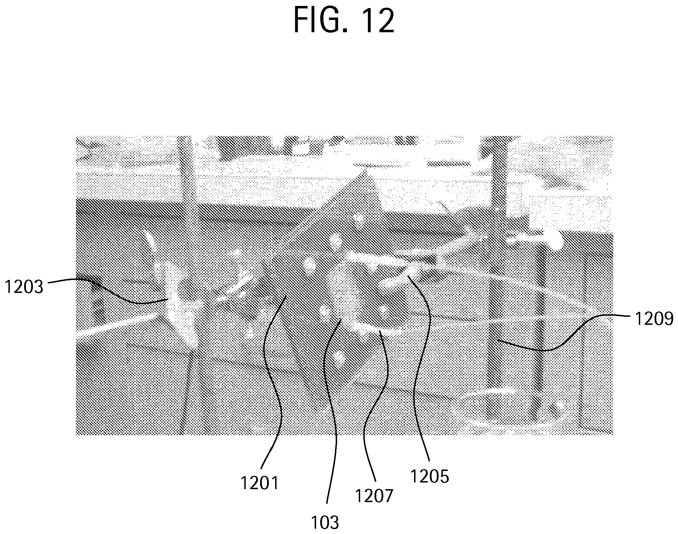

FIG. 12 shows an example of conductivity measurements being taken of the sensor. A RFID sensor 103 is shown attached to a surface 1201 that contains a fluidic test chamber , while the surface is being held by a right stand 1205. The left stand 1203 holds a pick-up antenna to pick up signal from the RFID sensor. Two tubings 1207 and 1209 are used to bring water or solution into and from the test chamber. The pick-up antenna is connected to the impedance analyzer 107a or a measurement device 111 (FIG. 1).

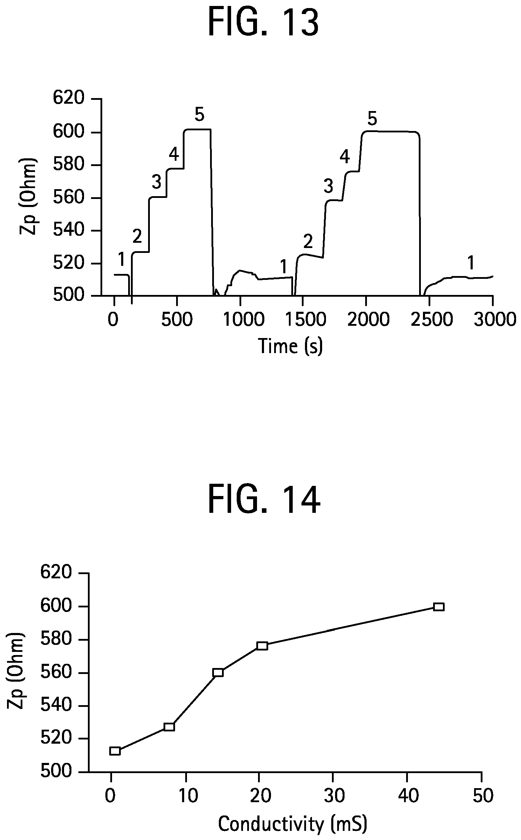

FIG. 13 is a graphical representation for the RFID sensor 103 shown in FIG. 12 where the complex impedance is measured in relation to time. This graph shows a graph of reproducibility of dynamic response and response magnitude of the laminated RFID sensor 103 in the flow cell upon replicate exposures to water samples of different conductivity. Five different water samples have a conductivity level of 0.49, 7.78, 14.34, 20.28, 44.06 mS/cm. where these water samples are respectively labeled as 1-5. The sensor response (an example is response Zp in Figure 12) was very reproducible between the replicate exposures. FIG. 14 is a graphical representation of the RFID sensor response shown in FIG. 12 where the complex impedance is measured in relation to time (Fig. 13). Also, this figure depicts a calibration curve as a conductivity response that was constructed from the responses of the RFID sensor 103 to different water samples with conductivities of 0.49, 7.78, 14.34, 20.28, 44.06 mS/cm. Figure 14 shows the sensor response as a function of water conductivity. Another embodiment for incorporation of the RFID sensors utilizes an adhesive layer that attaches sensors to the surface where the physical, chemical, or biological measurement should be made.

In another embodiment, a container (a disposable or reusable) 101 may be a micro titer plate. Individual wells of the micro titer plate or micro titer well plate have RFID sensors. These sensors are incorporated into the micro titer plate by any of the methods discussed above. RFID sensors can be also arranged in individual wells by dispensing. Often, it is critical to observe, detect, and sense effects of perturbation of the sample with a chemical, physical or biological perturbation. Nonlimiting examples include reagent addition, solvent addition, component addition, heating, stirring, cooling, exposure to electromagnetic radiation, and many others. These observations are monitored in real time with an array of RFID sensors 103 arranged in a micro titer plate.

This invention provides a system for assembling a disposable bio-processing system where the user can employ the bio-processing system to separately measure parameters in a solution, then the user can discard the disposable bio-processing system.

**Claims**

1. A system (100) for measuring multiple parameters, which system comprises a container (101) and a measurement device, wherein:

    the container comprises a bioprocessing fluid (101a), and a protective layer (105) is deposited over at least one sensor (103) and at least one wall of the container, the protective layer being attached to the wall of the container to form a seal between the container and the at least one sensor, wherein the at least one sensor is embedded, integrated or incorporated to a wall (101b) of the container, and the at least one sensor is configured to have an operable electromagnetic field adequate for the thickness of the container and the protective layer, i.e. the thickness and dielectric properties of the material of the protective layer (105) and the wall (101b) of the container (101) must be adequate in order for a pickup antenna (108a) to receive a signal from the sensor (103);

the at least one sensor is in conjunction with a tag (102) in proximity to an impedance analyzer (108) and a reader (106) that constitute the measurement device (111), whereby the impedance analyzer (108) includes the pickup antenna (108a), which excites the at least one sensor (103) and the pickup antenna (108a) collects a reflected radio frequency signal from the at least one sensor (103);

the at least one sensor is configured to determine at least one parameter of the bioprocessing fluid;

the tag is configured to provide a digital ID associated with the at least one sensor, wherein the container is in proximity to the reader and an impedance analyzer (108); and

wherein the impedance analyzer is configured to receive a given range of frequencies from the at least one sensor based on the parameter and calculate parameter changes based on the measured complex impedance over the given range of frequencies.

2. The system of claim 1, wherein the at least one sensor is a plurality of sensors in an array.

3. The system of claim 1 or 2, wherein the at least one parameter is comprised of conductivity measurement, pH level, temperature, and pressure measurement.

4. The system of any one of the preceding claims, wherein a sensor coating (107) is disposed over the at least one sensor (103) in between the at least one sensor and the protective layer (105), wherein the sensor coating enables the sensor to obtain at least one parameter of the bioprocessing fluid.

5. The system of any one of the preceding claims, wherein the sensor coating (107) is from a group comprising polymer film, organic film, inorganic film, biological composite film or nano-composite film.

6. The system of any one of the preceding claims, wherein the bioprocessing fluid includes a biological material from the group comprising bacteria, recombinant protein, virus, vaccine, living tissue or fractionated from a biological fluid.

7. The system of claim 1, wherein the container (101) is a micro titer plate where individual wells of the micro titer plate contains a plurality of RFID sensors in an array.

8. The system of anyone of the preceding claims, wherein:

   the container is a micro titer well plate;
   at least one sensor is an RFID sensor in individual well(s) of the micro titer well plate container.

9. The system of claim 8, wherein a sensing coating is deposited over at least one RFID sensor in individual wells of the micro titer well plate container.

10. The system of anyone of the preceding claims, wherein the sensor(s) are capable of measuring biological, chemical or physical parameters.

**Patentansprüche**

1. System (100) zum Messen von mehreren Parametern, wobei das System einen Behälter (101) und eine Messvorrichtung umfasst, wobei:

   der Behälter eine Bioverarbeitungsflüssigkeit (101a) umfasst, und wobei eine Schutzschicht (105) über wenigstens einem Sensor (103) und an wenigstens einer Wand des Behälters angeordnet ist, wobei die Schutzschicht an der Wand des Behälters befestigt ist, um eine Dichtung zwischen dem Behälter und dem wenigstens einen Sensor zu bilden, wobei der wenigstens eine Sensor in die Wand (101b) des Behälters eingebettet, integriert oder eingebaut ist, und wobei der wenigstens eine Sensor konfiguriert ist, um ein betriebsbereites elektromagnetisches Feld aufzuweisen, das für die Dicke des Behälters und der Schutzschicht geeignet ist, d. h., die Dicke und die dielektrischen Eigenschaften des Materials der Schutzschicht (105) und der Wand (101b) des Behälters (101) müssen geeignet sein, damit eine Sammelantenne (108a) ein Signal von dem Sensor (103) empfangen kann;
   der wenigstens eine Sensor in Verbindung mit einem Transponder (102) in einer Nähe zu einem Impedanz-Analysator (108) und einem Leser (106) ist, welche die Messvorrichtung (111) darstellen, wobei der Impedanz-Analysator (108) die Sammelantenne (108a) einschließt, die den wenigstens einen Sensor (103) stimuliert, und wobei die Sammelantenne (108a) ein reflektiertes Funkfrequenzsignal von dem wenigstens einen Sensor (103) sammelt;
   der wenigstens eine Sensor konfiguriert ist, um wenigstens einen Parameter der Bioverarbeitungsflüssigkeit zu bestimmen;
   der Transponder konfiguriert ist, um eine digitale ID, die mit dem wenigstens einen Sensor assoziiert ist, bereitzustellen, wobei der Behälter in einer Nähe zu dem Leser und einem Impedanz-Analysator (108) ist; und
der Impedanz-Analysator konfiguriert ist, um einen vorbestimmten Bereich von Frequenzen von dem wenigstens einen Sensor auf Grundlage des Parameters zu empfangen und Parameterveränderungen auf Grundlage der gemessenen komplexen Impedanz über dem vorbestimmten Bereich von Frequenzen zu berechnen.

2. System nach Anspruch 1, wobei der wenigstens eine Sensor eine Vielzahl von Sensoren in einer Anordnung ist.

3. System nach Anspruch 1 oder Anspruch 2, wobei der wenigstens eine Parameter aus einem Leitfähigkeitsmesswert, einem pH-Wert, einer Temperatur und einer Druckmessung besteht.

4. System nach einem der vorhergehenden Ansprüche, wobei eine Sensorbeschichtung (107) über dem wenigstens einen Sensor (103) zwischen dem wenigstens einen Sensor und der Schutzschicht (105) angeordnet ist, wobei die Sensorbeschichtung es dem Sensor ermöglicht, wenigstens einen Parameter der Bioverarbeitungsflüssigkeit zu erhalten.

5. System nach einem der vorhergehenden Ansprüche, wobei die Sensorbeschichtung (107) aus einer Gruppe stammt, die einen Polymerfilm, einen organischen Film, einen anorganischen Film, einen zusammengesetzten biologischem Film oder einen Nanokomposit-Film umfasst.

6. System nach einem der vorhergehenden Ansprüche, wobei die Bioverarbeitungsflüssigkeit ein biologisches Material einschließt, das aus einer Gruppe stammt, die Bakterien, ein rekombinantes Protein, einen Virus, einen Impfstoff, ein lebendes Gewebe umfasst, oder von einer biologischen Flüssigkeit fraktioniert ist.

7. System nach Anspruch 1, wobei der Behälter (101) eine Mikrotiterplatte ist, wobei individuelle Vertiefungen der Mikrotiterplatte eine Vielzahl von RFID-Sensoren in einer Anordnung enthalten.

8. System nach einem der vorhergehenden Ansprüche, wobei:
der Behälter eine Mikrotiterplatte mit Vertiefungen ist; wenigstens ein Sensor ein RFID-Sensor in (einer) individuellen Vertiefung(en) des Mikrotiterplattenbehälters mit Vertiefungen ist.

9. System nach Anspruch 8, wobei eine Sensorbeschichtung über wenigstens einem RFID-Sensor in individuellen Vertiefungen des Mikrotiterplattenbehälters mit Vertiefungen angeordnet ist.

10. System nach einem der vorhergehenden Ansprüche, wobei der/die Sensor(en) in der Lage ist/sind, biologische, chemische oder physikalische Parameter zu messen.

**Revendications**

1. Système (100) pour mesurer des paramètres multiples, lequel système comprend un contenant (101) et un dispositif de mesure, dans lequel :

le contenant comprend un fluide de biotraitement (101a), et une couche de protection (105) est déposée sur au moins un capteur (103) et au moins une paroi du contenant, la couche de protection étant fixée à la paroi du contenant pour former un joint entre le contenant et l'au moins un capteur, dans lequel l'au moins un capteur est noyé, intégré ou incorporé à une paroi (101b) du contenant, et l'au moins un capteur est configuré pour avoir un champ électromagnétique actionnable adapté à l'épaisseur du contenant et la couche de protection, autrement dit l'épaisseur et les propriétés diélectriques du matériau de la couche de protection (105) et la paroi (101b) du contenant (101) doivent être adaptées pour qu'une antenne de capteur (108a) reçoive un signal du capteur (103) ;
l'au moins un capteur est conjointement avec une étiquette (102) à proximité d'un analyseur d'impédance (108) et d'un lecteur (106) qui constituent le dispositif de mesure (111), moyennant quoi l'analyseur d'impédance (108) comprend l'antenne de capteur (108a), qui excite l'au moins un capteur (103) et l'antenne de capture (108a) collecte un signal radiofréquence réfléchi de l'au moins un capteur (103) ;
l'au moins un capteur est configuré pour déterminer au moins un paramètre du fluide de biotraitement ;
l'étiquette est configurée pour fournir un ID numérique associé à l'au moins un capteur, dans lequel le contenant est à proximité du lecteur et d'un analyseur d'impédance (108) ; et
dans lequel l'analyseur d'impédance est configuré pour recevoir une plage de fréquences donnée de l'au moins un capteur sur la base du paramètre et calculer des changements de paramètre sur la base de l'impédance complexe mesurée sur la plage de fréquences donnée.

2. Système selon la revendication 1, dans lequel l'au moins un capteur est une pluralité de capteurs dans un réseau.

3. Système selon la revendication 1 ou 2, dans lequel l'au moins un paramètre comprend une mesure de conductivité, un pH, une température et une mesure de pression.

4. Système selon l'une quelconque des revendications précédentes, dans lequel un revêtement de capteur (107) est disposé sur l'au moins un capteur (103) entre l'au moins un capteur et la couche de protection (105), dans lequel le revêtement de capteur permet au capteur d'obtenir au moins un paramètre du fluide de biotraitement.

5. Système selon l'une quelconque des revendications précédentes, dans lequel le revêtement de capteur (107) provient d'un groupe comprenant un film polymère, un film organique, un film inorganique, un film composite biologique ou un film nano-composite.

6. Système selon l'une quelconque des revendications précédentes, dans lequel le fluide de biotraitement comprend un matériau biologique du groupe comprenant une bactérie, une protéine recombinante, un virus, un vaccin, un tissu vivant ou fractionné d'un fluide biologique.

7. Système selon la revendication 1, dans lequel le contenant (101) est une plaque de microtitration, où des puits individuels de la plaque de microtitration contient une pluralité de capteurs RFID dans un réseau.

8. Système selon l'une quelconque des revendications précédentes, dans lequel :

> le contenant est une plaque de puits de microtitration ;
> au moins un capteur est un capteur RFID dans un (des) puits individuel(s) du contenant de plaque de puits de microtitration.

9. Système selon la revendication 8, dans lequel un revêtement de détection est déposé sur au moins un capteur RFID dans des puits individuels du contenant de plaque de puits de microtitration.

10. Système selon l'une quelconque des revendications précédentes, dans lequel le(s) capteur(s) sont capables de mesurer des paramètres biologiques, chimiques ou physiques.

# FIG. 1

# FIG. 2A

# FIG. 2B

# FIG. 3

<u>102</u>

307

305

303

301

# FIG. 4A

403

401

# FIG. 4B

407

401

Resonant Antenna Circuit

409

Power Supply

Backscatter
Modulator

RFID
CHIP

# FIG. 4C

Resonant Antenna Circuit

Power Supply

RFID CHIP

Backscatter Modulator

# FIG. 4D

**Resonant Antenna Circuit**

**Backscatter Modulator**

**Second Resonant Circuit**

# FIG. 5

```
        ( Start )
            │
            ▼
┌───────────────────────────┐
│   Cutting of container    │ ─── 501
│  film/sheet to dimension  │
└───────────────────────────┘
            │
            ▼
┌───────────────────────────┐
│     Unwinding and cutting of │ ─── 503
│   protective film to dimension │
└───────────────────────────┘
            │
            ▼
┌───────────────────────────┐
│  Stacking of multilayer bio-container │ ─── 505
│ film (or sheet)/RFID sensor/protective film │
└───────────────────────────┘
            │
            ▼
┌───────────────────────────┐
│ Ultrasound welding of protective film and the │ ─── 507
│  bio-container film (or sheet) to embed the │
│           RFID sensor(s)         │
└───────────────────────────┘
            │
            ▼
┌───────────────────────────┐
│ Ultrasound welding of peripheral edges and │ ─── 509
│    tubes to form bio-containers   │
└───────────────────────────┘
            │
            ▼
         ( End )
```

# FIG. 6

Start

Cutting of container
film/sheet to dimension — 601

Unwinding and cutting of
protective film to dimension — 603

Stacking of multilayer bio-container
film (or sheet)/RFID sensor/protective film — 605

RF welding of protective film and the bio-
container film or sheet to embed the RFID
sensor(s) — 607

RF welding of peripheral edges and
tubes to form bio-containers — 609

End

# FIG. 7

```
                    ┌─────────┐
                    │  Start  │
                    └─────────┘
                         │
                         ▼
      ┌──────────────────────────────────┐
      │      Cutting of container         │
      │     film/sheet to dimension       │────  701
      └──────────────────────────────────┘
                         │
                         ▼
      ┌──────────────────────────────────┐
      │        Unwinding and cutting of   │
      │      protective film to dimension │────  703
      └──────────────────────────────────┘
                         │
                         ▼
      ┌──────────────────────────────────┐
      │   Stacking of multilayer bio-container │
      │  film (or sheet)/RFID sensor/protective film │────  705
      └──────────────────────────────────┘
                         │
                         ▼
      ┌──────────────────────────────────┐
      │  Heat lamination of protective film and the bio-  │
      │  container film (or sheet) to embed the RFID │────  707
      │                 sensor(s)          │
      └──────────────────────────────────┘
                         │
                         ▼
      ┌──────────────────────────────────┐
      │   Heat lamination of peripheral edges and │
      │      tubes to form bio-containers  │────  709
      └──────────────────────────────────┘
                         │
                         ▼
                    ┌─────────┐
                    │   End   │
                    └─────────┘
```

# FIG. 8

Start

Cutting of container film/sheet to dimension — 801

Unwinding and cutting of protective film to dimension — 803

Stacking of multilayer bio-container film (or sheet)/RFID sensor/protective film — 805

Hot plate welding of protective film and the bio-container film (or sheet) to embed the RFID sensor(s) — 807

Hot plate welding of peripheral edges and tubes to form bio-containers — 809

End

# FIG. 9

Start

Unwinding and cutting of
protective film to dimension — 901

Stacking of multilayer protective
film/RFID sensor assembly in the mold — 903

Injection mold thermoplastics or elastomer
through in-mold decoration process — 905

Conductive heat welding or inductive heat
welding of peripheral edges and tubes to form
bio-containers — 907

End

# FIG. 10A

1000

# FIG. 10B

1001

1003

# FIG. 11

# FIG. 12

## FIG. 13

## FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6359444 B
- US 6025725 A
- US 6586946 B
- WO 2005074161 A, Peeters, John P.
- WO 2006091631 A, Watkins, Kenneth
- US 7038470 B
- US 11259710 B
- LT S2006038198 W
- US 11536030 B
- US 60803265 B

**Non-patent literature cited in the description**

- *Chemical and Biological Sensors, Systems and Methods Based on Radio Frequency Identification,* 26 October 2005
- *Systems and Method for Monitoring Parameters in Containers,* 28 September 2006